# EUROPÄISCHE PATENTANMELDUNG

(11) **EP 2 022 330 A2**
(43) Veröffentlichungstag der Anmeldung: **11.02.2009**
(21) Anmeldenummer: 08013739.1
(22) Anmeldetag: 31.07.2008
(51) Int. Cl.: A01M 9/00, A01M 7/00

(54) **Ausblaseinrichtung**

(30) Priorität: 09.08.2007 DE 202007011167 U
(71) Anmelder: Schneider, Rudi, 79697 Wies (DE)
(72) Erfinder: Schneider, Rudi, 79697 Wies (DE)
(74) Vertreter: Maucher, Wolfgang

(57) **Zusammenfassung**

Die Erfindung bezieht sich auf eine Ausblaseinrichtung, mit mindestens einem Gebläse (8), dem eine Blasgut-Zuführungseinrichtung zum Fördern des Blasguts zu dem Gebläse (8) zugeordnet ist. Die Ausblaseinrichtung weist zumindest einen im wesentlichen horizontal oder vertikal orientierten Tragarm (9) auf, der das zumindest eine Gebläse (8) trägt welches einen elektrischen Gebläseantrieb (13) aufweist. Die dem zumindest einem Gebläse (8) zugeordnete Blasgut-Zuführungseinrichtung ist als pneumatische Blasgut-Zuführungseinrichtung ausgestaltet. Zusätzlich kann ein Wassertank (22) vorgesehen sein, der durch eine Schlauchleitung mit dem Gebläse (8) verbunden ist, so dass das Blasgut innerhalb des Gebläses angefeuchtet wird.

## Beschreibung

Die Erfindung bezieht sich auf eine Ausblaseinrichtung mit mindestens einem Gebläse, dem eine Blasgut-Zuführungseinrichtung zum Fördern des Blasguts zu dem Gebläse zugeordnet ist.

Solche Ausblaseinrichtungen werden vorwiegend in der Land- und Forstwirtschaft verwendet, um vorwiegend trockenes Blasgut, beispielsweise Kalk, Kompost oder Düngemittel, auf landwirtschaftlichen Nutzflächen möglichst gleichmäßig zu verteilen. Eine Ausführung einer Ausblaseinrichtung ist beispielsweise aus dem Europäischen Patent EP 0 875 135 B1 bekannt.

Durch die begrenzte Auswurfweite des Gebläses ist es jedoch zumeist zweckmäßig oder notwendig, die Ausblaseinrichtung auf einem Fahrzeug anzubringen und mit diesem die Nutzfläche abzufahren, damit das Blasgut auf der gesamten Fläche verteilt werden kann. Damit verbunden ist jedoch eine durch das Gewicht des Fahrzeugs bedingte Nachverdichtung der Nutzfläche, was in den meisten Fällen negative Auswirkungen auf die Bodenbeschaffenheit hat. Insbesondere bei der Bewirtschaftung von Sonderkulturen kann es aber auch unmöglich sein, die Fläche abzufahren, beispielsweise an steilen Rebhängen oder in dichten Wäldern.

Eine Aufgabe der Erfindung ist es daher, eine Ausblaseinrichtung der eingangs erwähnten Art zu schaffen, die eine effiziente Ausbringung von Blasgütern, insbesondere auch in Sonderkulturen und unter schwierigen Geländeverhältnissen, erlaubt.

Die erfindungsgemäße Lösung dieser Aufgabe besteht bei der Ausblaseinrichtung der eingangs erwähnten Art insbesondere darin, dass zumindest ein im wesentlichen horizontal oder vertikal orientierter Tragarm vorgesehen ist, der zumindest ein Gebläse trägt, dass das zumindest eine Gebläse einen elektrischen Gebläseantrieb aufweist, und dass die dem zumindest einen Gebläse zugeordnete Blasgut-Zuführungseinrichtung als pneumatische Blasgut-Zuführungseinrichtung ausgestaltet ist.

Da die erfindungsgemäße Ausblaseinrichtung zumindest ein Gebläse mit einem elektrischen Gebläseantrieb aufweist, lässt sich die erfindungsgemäße Ausblaseinrichtung selbst bei Verwendung mehrerer Gebläse optimal steuern, da die Gebläse gegebenenfalls auch getrennt voneinander ansteuerbar sind. Da das Blasgut dem zumindest einen Gebläse gegebenenfalls auch über weite Strecken zugeführt werden muss, ist die pneumatische Blasgut-Zuführungseinrichtung sinnvoll und notwendig, bei welcher das Material dem zumindest einen Gebläse über einen Luft- oder dergleichen Fluidstrom zugeführt wird. Die erfindungsgemäße Ausblaseinrichtung weist zumindest einen, im wesentlichen horizontal oder vertikal orientierten Tragarm auf, an dem zumindest ein Gebläse vorgesehen ist. Die erfindungsgemäße Ausblaseinrichtung kann somit in einer stationären oder auch in einer fahrbaren Ausführungsform eingesetzt werden.

In einer ersten Ausführung der Erfindung ist die Ausblaseinrichtung auf einem Fahrzeug oder einem Fahrzeuganhänger angeordnet. Durch die Anordnung von mindestens zwei Gebläsen, beispielsweise auf einem horizontalen Tragarm, ist es möglich, rechts und links vom Fahrzeug auszublasen, so dass auf einer normal befahrbaren Nutzfläche nur halb so viele Fahrten notwendig sind und die Nachverdichtung des Bodens dadurch wesentlich reduziert werden kann.

Dadurch, dass die elektrischen Rotationsantriebe der Gebläse getrennt ansteuerbar sind, ist es zudem möglich, bei Kurvenfahrten das kurveninnere Gebläse in der Auswurfleistung zu reduzieren, damit pro Fläche immer die gleiche Blasgutmenge ausgetragen wird. Ebenso ist es möglich, am Rand der Nutzfläche das dem Flächenrand zugewandte Gebläse zu deaktivieren, so dass Blasgut nicht unnötig auf eine angrenzende Fläche oder einen Weg geblasen wird. Somit ist eine sparsamere und effektivere Bewirtschaftung der Nutzfläche möglich.

Eine weitere Ausführung der Erfindung sieht vor, die Ausblaseinrichtung stationär anzuordnen. Es ist beispielsweise denkbar, einzelne Gebläse über die gesamte, zu bewirtschaftende Fläche zu verteilen und dort fest zu installieren. Somit ist es auch auf schwer zugänglichen Flächen, wie steilen Rebhängen, möglich, gezielt Blasgut auszubringen. Darüber hinaus wird eine Nachverdichtung des Bodens gänzlich vermieden, so dass diese Ausführung auch in empfindlichen Sonderkulturen Einsatz finden kann.

Zweckmäßig ist es, die Gebläse auf Haltemasten anzubringen, damit eine gewisse Arbeitshöhe erreicht wird und die Auswurfweite nicht zu gering ist.

Weiterhin ist es möglich, die Gebläse an wenigstens einem horizontalen Tragarm, der beweglich auf einer stationär angeordneten Führungsvorrichtung gelagert ist, anzuordnen. Der Tragarm kann auf der Führungsvorrichtung über die Nutzfläche bewegt werden und ermöglicht damit das Bestäuben der gesamten Fläche. Die Gebläse können so am Tragarm verteilt angeordnet werden, dass ein gleichmäßiger Austrag erfolgt. Durch die elektrische Steuerung der einzelnen Gebläse ist es dabei auch möglich, einzelne Stellen innerhalb der Fläche weniger oder gar nicht zu bestäuben, falls beispielsweise eine Unterbrechung der Nutzfläche vorliegt, beispielsweise ein Weg, eine Felsformation, eine Wasserstelle oder dergleichen.

Insbesondere bei der stationären Anordnung der Gebläse auf Haltemasten, aber auch bei der mobilen Anwendung, ist es zweckmäßig, wenn die Gebläse schwenkbar sind. Dabei ist eine Schwenkbewegung um eine vertikale Achse möglich, um beispielsweise eine kreisförmige Fläche um einen Haltemast zu bestäuben. Alternativ oder zusätzlich ist eine horizontale Schwenkbewegung im abströmseitigen Teilbereich des Gebläses denkbar, um die Auswurfweite zu regulieren.

Eine weitere Ausgestaltung der Erfindung sieht vor, dass die Ausblaseinrichtung einen Vorratsbehälter für das Blasgut aufweist. Dabei ist es möglich, auch bei stationären Gebläsen, den Vorratsbehälter auf einem Fahrzeug anzubringen wodurch ein einfacher Transport des Blasguts zu der Einsatzstelle gewährleistet wird. Die pneumatische Blasgut-Zuführeinrichtung sorgt schon beim Transport zum Gebläse für eine gewisse Auflockerung des Blasguts, so dass Schäden am Gebläse durch grobe Blasgut-Agglomerate verhindert werden und eine gleichmäßige Verteilung des Blasguts erleichtert wird.

Bevorzugt weist die pneumatische Blasgut-Zuführeinrichtung eine Fördereinrichtung auf, die das Blasgut aus dem Vorratsbehälter fördert und einen Kompressor, der das Blasgut in einem Luftstrom verwirbelt und in einem Blasgutkanal zu dem Gebläse transportiert. Die Fördereinrichtung kann beispielsweise eine Förderschnecke oder ein Transportband sein, die oder das an oder in einer Öffnung im Vorratsbehälter angeordnet ist und das Blasgut zu einem Kompressor fördert, wo das Blasgut in einem Luftstrom aufgelockert wird. Der Blasgut-Luftstrom wird in einem Blasgutkanal zu dem Gebläse geführt, wo das Blasgut direkt in das Förder-Flügelrad des Gebläses geblasen wird. Dadurch wird nicht nur eine gleichmäßige Verteilung des Blasguts vereinfacht, sondern auch der Verschleiß im Gebläse reduziert, da das schleissende Blasgut nicht mit Gehäuseteilen in Berührung kommt.

An einem Blasgutkanal können mehrere Gebläse angeordnet sein, die gleichzeitig mit Blasgut versorgt werden. Ebenso ist es denkbar, den Tragarm als Blasgutkanal auszugestalten, so dass keine zusätzlichen Bauelemente notwendig sind.

In flachen Lagen kann es vorkommen, dass das ausgeblasene Blasgut einen sehr dichten Staub bildet, der durch Wind abdriften und unter anderem an angrenzenden Straßen die Sicht beeinträchtigen kann. Um solche Staubbildung zu verhindern, ist es vorteilhaft, wenn das Blasgut vor dem Ausblasen mit Wasser befeuchtet wird. Dadurch wird das Blasgut derart "beschwert", dass davongetragenen Blasgutstäube nicht entstehen können.
Insbesondere bei der Austragung von Düngemitteln wird durch diese Wasserzugabe zudem die Blattdüngung begünstigt, die mit dem schutzrechtsgemäßen System ohnehin vorgesehen ist.
Vorteilhaft dabei ist auch, dass die Blattdüngung nicht ausschließlich nur während der Tauphase zwischen 3 Uhr und 5 Uhr morgens, in der die Blätter vom Tau befeuchtet sind, durchgeführt werden kann. Da der Dünger das benötigte Wasser selbst mitbringt, kann er auch später wirkungsvoll ausgebracht werden.
Das erlaubt auch die unterbrechungsfreie Bearbeitung größerer Flächen und Flächen an schwierigen Lagen.

Eine Weiterbildung der Erfindung für die selbstständiger Schutz beansprucht wird, weist daher wenigstens einen Wasserbehälter auf, von dem Wasser zu den einzelnen Gebläsen förderbar ist. Die Anordnung des Wassertanks ist dabei nahezu beliebig. Beispielsweise kann der Wassertank in einen Dreipunkt-Anbau integriert, neben einer stationären Vorrichtung oder auf einem Fahrzeuganhänger, separat oder zusammen mit der Ausblaseinrichtung angeordnet sein.

Vom Wassertank führt ein dünnes Röhrchen oder ein Schlauch bis in den Verdichterbereich des Gebläses. Das in den Verdichterbereich eingetragene Wasser wird derart aufgewirbelt und in feinste Tröpfchen verteilt, dass nur geringe Wassermengen notwendig sind, um die erfindungsgemäße Befeuchtung zu erzielen. Dabei hat sich als vorteilhaft gezeigt, wenn das Wasser über die dünne Wasserleitung mit Hilfe des Gebläses angesaugt wird und nicht in den Verdichterbereich gepumpt wird. Bei einem Einpumpen oder Einspritzen des Wasser in den Verdichterbereich erfolgt ein nur punktueller Wassereintrag, so dass nicht der gesamte Blasgut-Staub mit Wasser in der angestrebten Weise durchmischt wird. Das vom Gebläse im Verdichterbereich angesaugte Wasser wird dort zerrissen und mit dem Blasgut-Staub derart fein durchmischt, dass sich ein nahezu abdriftfreier Blasgut-Staub ergibt.

Zur Stromversorgung der elektrischen Gebläse-Antriebe und auch der Blasgut-Fördereinrichtung ist ein Stromgenerator vorgesehen. Der Stromgenerator kann zusammen mit der vollständigen Ausblaseinrichtung auf einem Fahrzeug oder einem Fahrzeuganhänger angeordnet sein, oder im Falle einer stationären Ausblaseinrichtung als mobile oder fest installierte Einzelkomponente ausgeführt sein.

Der Stromgenerator kann über die Zapfwelle eines Fahrzeugs angetrieben werden. Das Fahrzeug kann dabei das Fahrzeug sein, auf dem die Ausblaseinrichtung angeordnet ist. Denkbar ist auch, dass bei einem fest installierten Stromgenerator ein Fahrzeug nur für die Dauer der Anwendung angekoppelt werden kann. Danach kann der Stromgenerator auf dem Feld verbleiben, während das Fahrzeug für andere Aufgaben verwendet werden kann.

Ebenso ist es denkbar, dass in diesem Fahrzeug die Steuerung für eine fest installierte Ausblaseinrichtung angeordnet ist, so dass zum Betrieb immer das Fahrzeug mit der Ausblaseinrichtung verbunden sein muss.

Somit ist ein System denkbar, bei dem die Gebläse mit einer Blasgut-Zuführeinrichtung fest auf einer Nutzfläche installiert sind. Ein Blasgut-Vorratsbehälter befindet sich auf einem Steuerfahrzeug, das für den Betrieb an die stationäre Komponente angekoppelt werden kann. Dabei ist es möglich, auch den Stromgenerator auf dem Fahrzeug anzuordnen. Somit ist der Aufwand an fest installierten Geräten sehr gering, so dass die Anordnung kostengünstig realisierbar ist. Blasgut und Stromversorgung können somit einfach zu mehreren Feldern transportiert werden. Darüber hinaus ist der Aufwand, der für Diebstahlschutz betrieben werden muss, bei dieser Anordnung geringer, da keine einfach zu entfernenden Geräte auf dem Feld verbleiben.

Weiterhin ist es möglich den Stromgenerator mit einem eigenen Antrieb, beispielsweise einem Verbrennungsmotor, zu versehen. Dadurch spart man den Kraftstoff, den beispielsweise das Fahrzeug benötigen würde. Man kann stattdessen auch ein komplett autarkes System an weit abgelegenen Orten realisieren, das vollständig automatisiert betrieben werden kann. Denkbar ist dabei auch eine Stromversorgung über eine Windkraft- oder Solaranlage.

Nachfolgend werden einige Ausführungsbeispiele der Erfindung anhand der Zeichnungen näher erläutert.

Es zeigen:
- Fig. 1a,b: eine erste Ausführung einer mobilen Ausblaseinrichtung mit vertikalen Tragarmen ohne und mit Wassertank,
- Fig. 2a,b: eine zweite Ausführung einer mobilen Ausblaseinrichtung mit horizontalen Tragarmen ohne und mit Wassertank,
- Fig. 3a,b: eine dritte Ausführung einer Ausblaseinrichtung mit stationären Gebläsen auf Haltemasten ohne und mit Wassertank,
- Fig. 4: eine vierte Ausführung einer Ausblaseinrichtung mit einem stationären Aufbau und
- Fig. 5: eine erfindungsgemäse Ausblaseinrichtung auf einem Dreipunk-Auflieger.

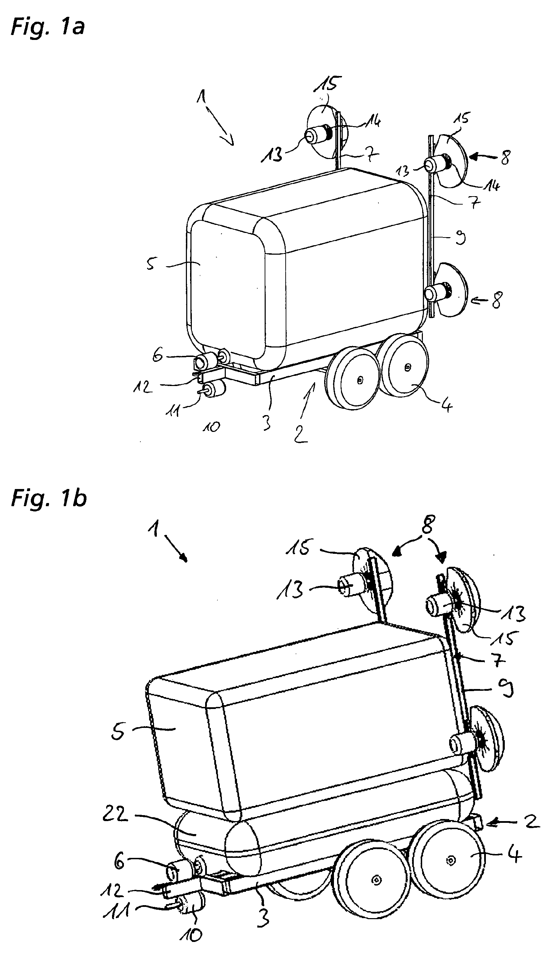

Figur 1a zeigt eine Ausblaseinrichtung 1, die auf einem Fahrzeuganhänger 2 angeordnet ist. Der Fahrzeuganhänger 2 weist im wesentlichen ein Anhängergestell 3 mit Rädern 4 auf, auf dem ein Blasgut-Vorratsbehälter 5 aufgesetzt ist. Über eine Kupplung 12 ist der Anhänger an ein Zugfahrzeug ankoppelbar. An dem Blasgut-Vorratsbehälter 5 ist heckseitig, dem Zugfahrzeug abgewandt, eine Blasgut-Zuführeinrichtung (nicht gezeigt) angeordnet, die durch einen frontseitig angebrachten Elektromotor 6 angetrieben wird und die das Blasgut über die Blasgutkanäle 7 zu den Gebläsen 8 befördert.

Am Heck des Fahrzeuganhängers 2 sind der Blasgut-Zuführeinrichtung zwei vertikal ausgerichtete und nebeneinander angeordnete Tragarme 9 mit Blasgutkanälen 7 zugeordnet, über die das Blasgut zu den Gebläsen 8 transportiert wird. Im gezeigten Beispiel sind an jedem Tragarm 9 zwei Gebläse 8 übereinander angeordnet. Die Ausblasrichtung der Gebläse 8 ist dabei jeweils seitlich nach außen gerichtet, wobei sich die Ausblaskegel der an einem Tragarm 9 befestigten Gebläse 8 überschneiden.

An der Frontseite des Anhängergestells ist weiterhin ein Stromgenerator 10 mit freiliegender Antriebswelle 11 zum Anschluss an die Zapfwelle des Zugfahrzeugs angeordnet, der die Gebläse 8 mit Strom versorgt.

Die Gebläse 8 weisen jeweils einen Elektromotor 13 als rotatorischen Antrieb, ein Flügel-Förderrad 14 und ein Gebläsegehäuse 15 auf.

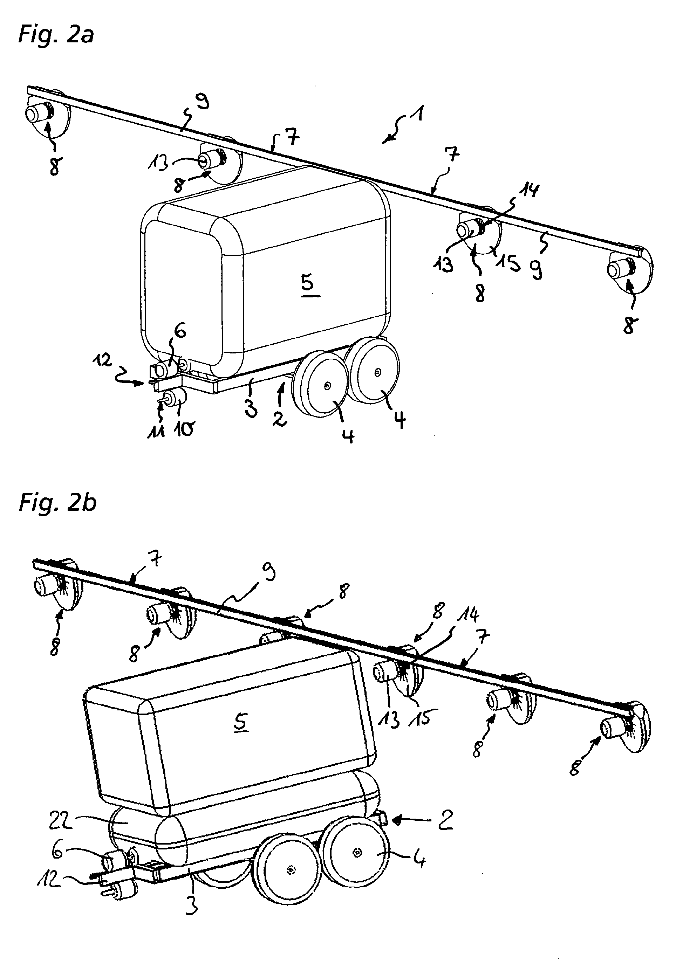

Die in Fig. 2a gezeigte Ausblaseinrichtung 1 entspricht im wesentlichen der in Fig. 1a gezeigten Ausblaseinrichtung. Heckseitig ist hier nur noch ein horizontal ausgerichteter Tragarm 9 vorgesehen, an dem die Gebläse 8 jeweils voneinander beabstandet angeordnet sind. Die Ausblasrichtung der Gebläse 8 ist dabei jeweils nach unten gerichtet, wobei sich die Ausblaskegel überschneiden, so dass eine ununterbrochene Linie ausgeblasen und eine befahrene Fläche somit vollständig und gleichmäßig bestäubt werden kann. Auch bei dieser Ausführung ist der Blasgutkanal 7 in den Tragarm 9 integriert.

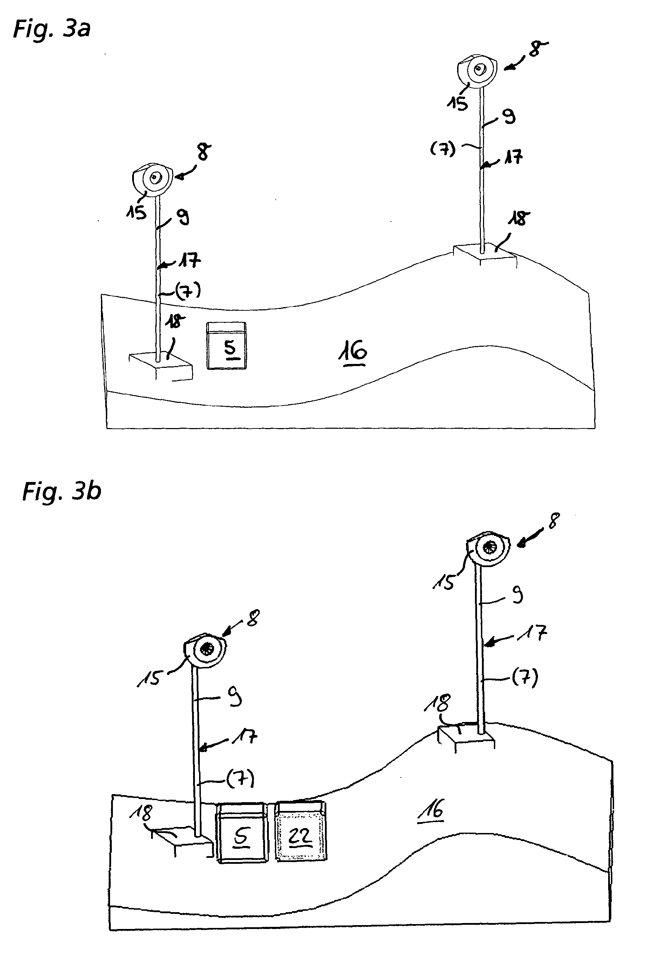

Figur 3a zeigt eine Ausführung der erfindungsgemäßen Ausblaseinrichtung mit stationär angeordneten Gebläsen 8. Dabei sind über die Nutzfläche 16 verteilt mehrere Gebläse 8 angeordnet, wobei nur ein Ausschnitt mit zwei Gebläsen gezeigt ist. Die Gebläse sind jeweils auf einem Haltemast 17 angeordnet, der auf einem Sockel 18 im Boden verankert ist, aber auch anders befestigt sein kann. Der Haltemast 17 weist einen vertikalen Tragarm 9 mit einem Blasgutkanal 7 auf, in dem das Blasgut zu dem Gebläse 8 transportiert werden kann. Die Ausblaseinrichtung weist weiterhin einen Blasgut-Vorratsbehälter 5 auf, der über eine Blasgut-Zuführeinrichtung ein oder mehrere Gebläse mit Blasgut versorgen kann und getrennt von den Haltemasten 17 an einer geeigneten Stelle auf dem Feld 16 platziert sein kann.

Die Ausblaseinrichtungen der Fig. 1b, 2b, 3b entsprechen jeweils den Fig. 1a, 2a, 3a bis auf den zusätzlich vorhandenen Wassertank 22 und der Möglichkeit das Blasgut aus dem Wassertank 22 zu befeuchten um ein ungewolltes Abdriften von Blasgut-Stäuben zu verhindern. Die Beimischung des Wassers zu dem Blasgut erfolgt im Gebläse 8, wobei das Wasser vorzugsweise von dem Gebläse 8 angesaugt wird. Dazu führt ein dünnes Röhrchen oder ein dünner Schlauch von dem Wassertank 22 in den Verdichterbereich des Gebläses 8. Das Wasser wird durch einen Unterdruck angesaugt und im Gebläse verwirbelt und in feinste Tröpfchen verteilt, so dass nur geringe Wassermengen notwendig sind.
Das Ansaugröhrchen hat beispielsweise einen lichten Leitungsdurchmesser von etwa 8 mm. Mit einer Förderleistung von etwa 6 Litern pro Minute können gute Ergebnisse erzielt und eine Fläche mit einem Hektar in etwa 3 bis 5 Minuten bestäubt werden. Da das ausgebrachte Blasgut weniger abdriftet und somit gezielter ausgebracht werden kann, kann zudem der Blasgutverbrauch um etwa 30% bis 35% reduziert werden.

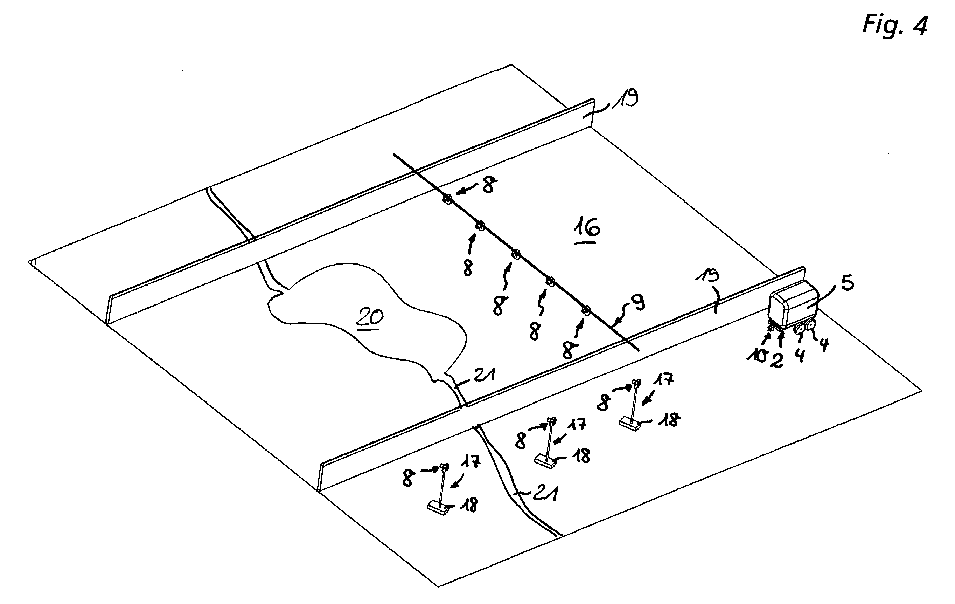

In Fig. 4 ist eine weitere Anordnung einer Ausblaseinrichtung 1 auf einer Fläche 16 gezeigt. Auf dem Feld 16 sind voneinander beabstandet zwei Führungsschienen 19 angeordnet, auf denen ein horizontaler Tragarm 9 beweglich gelagert ist. An dem Tragarm 9 sind gleichmäßig verteilt Gebläse 8 befestigt, deren Ausblasrichtung nach unten weist. Durch die bewegliche Lagerung kann der Tragarm 9 entlang der Führungsschienen 18 das gesamte Feld 16 abfahren und so eine gleichmäßige Bestäubung ermöglichen. Zusätzlich zu dieser Anordnung sind auf dem Feld 16 noch drei Gebläse 8 an Haltemasten 17 angeordnet, wie in Fig. 3 beschrieben. Das kann zur Ergänzung bei schwierigen Topologien sinnvoll sein, um eine gleichmäßige Blasgutverteilung zu erzielen. In diesem Ausführungsbeispiel ist an einem Rand des Feldes 16 ein Blasgut-Vorratsbehälter 5 auf einem Fahrzeuganhänger 2 angeordnet. Der Blasgut-Vorratsbehälter-Anhänger kann einfach mit der Blasgut-Zuführungseinrichtung der stationären Anordnung verbunden werden. Zum Antrieb des Systems ist auf dem Anhänger ein Stromgenerator 10 mit der Zapfwelle eines Zugfahrzeugs verbunden (nicht gezeigt). Dadurch ist ein sehr flexibles System erreicht, bei dem Blasgut einfach transportiert werden kann und die feste Installation auf dem Feld 16 auf einen Mindestaufwand beschränkt bleibt.

Im Zentrum des Feldes 16 ist weiterhin eine Unterbrechung der Nutzfläche durch eine Wasserstelle 20 mit Bachlauf 21 angedeutet, die eine herkömmliche Bewirtschaftung mit einem Fahrzeug unmöglich macht oder zumindest erheblich erschwert. Dadurch dass die Gebläse 8 einzeln steuerbar sind, können gezielt um die Wasserstelle 20 herum einzelne Gebläse 8 ausgeschaltet oder in der Ausblasleistung reduziert werden, so dass kein Blasgut in die Wasserstelle 20 oder den Bachlauf 21 gelangt. Gerade bei der Ausbringung von Düngemittel kann somit auch zum Wasserschutz beigetragen werden.
Auch diese Ausführung der Erfindung kann durch einen Wassertank und eine Wasserzuführung zu dem Gebläse 8 ergänzt werden, um einen beschwerten Blasgutstaub zu erhalten. Alternativ könnte das Wasser auch direkt aus der Wasserstelle 20 oder dem Bachlauf 21 angesaugt werden, so dass kein zusätzlicher Wassertank notwendig ist.

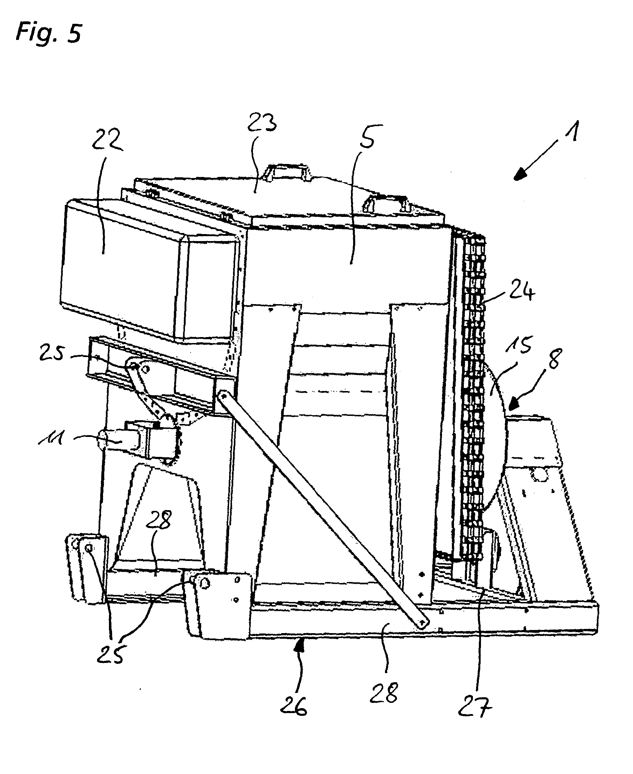

Die Fig. 5 zeigt eine konkrete Ausführung der Erfindung auf einem Dreipunkt-Auflieger 26. Das Gebläse 8 ist dabei auf einem Tragarm 27 befestigt, der zwischen den beiden Schenkeln 28 des Dreipunkt-Aufliegers 26 angeordnet ist. Der Dreipunkt-Auflieger 26 wird mit den drei Befestigungsflanschen 25 an dem Heckkraftheber eines Traktors befestigt. Die Generatorwelle 11 zum Antrieb eines Stromgenerators wird an die ZapfWelle des Traktors angekoppelt. Der Blasgut-Vorratsbehälter 5 ist im vorderen Bereich des Aufliegers 26 angeordnet und über eine Klappe 23 befüllbar. Das Gebläse 8 ist am hinteren Ende des Aufliegers 26 angeordnet. Der Blasgut-Auswurf erfolgt über mehrere seitlich angeordnete Leitbleche 24 zwischen Blasgut-Behälter 5 und Gebläse 8. Ein Wassertank 22 ist am Blasgut-Behälter 5 angeordnet und über ein Saugröhrchen mit dem Gebläse 8 verbunden, so dass das Blasgut befeuchtet werden kann. Der Wassertank 22 kann jedoch auch extern, beispielsweise in einem zusätzlichen Anhänger oder auf dem Traktor angeordnet sein.Die Erfindung bezieht sich auf eine Ausblaseinrichtung, mit mindestens einem Gebläse (8), dem eine Blasgut-Zuführungseinrichtung zum Fördern des Blasguts zu dem Gebläse (8) zugeordnet ist. Die Ausblaseinrichtung weist zumindest einen im wesentlichen horizontal oder vertikal orientierten Tragarm (9) auf, der das zumindest eine Gebläse (8) trägt welches einen elektrischen Gebläseantrieb (13) aufweist. Die dem zumindest einem Gebläse (8) zugeordnete Blasgut-Zuführungseinrichtung ist als pneumatische Blasgut-Zuführungseinrichtung ausgestaltet. Zusätzlich kann ein Wassertank (22) vorgesehen sein, der durch eine Schlauchleitung mit dem Gebläse (8) verbunden ist, so dass das Blasgut innerhalb des Gebläses angefeuchtet wird. (Fig. 1a)

## Patentansprüche

1. Ausblaseinrichtung, mit mindestens einem Gebläse (8), dem eine Blasgut-Zuführungseinrichtung zum Fördern des Blasguts zu dem Gebläse (8) zugeordnet ist, **dadurch gekennzeichnet, dass** zumindest ein im wesentlichen horizontal oder vertikal orientierter Tragarm (9) vorgesehen ist, der das zumindest eine Gebläse (8) trägt, dass das zumindest eine Gebläse (8) einen elektrischen Gebläseantrieb (13) aufweist, und dass die dem zumindest einem Gebläse (8) zugeordnete Blasgut-Zuführungseinrichtung als pneumatische Blasgut-Zuführungseinrichtung ausgestaltet ist.

2. Ausblaseinrichtung nach Anspruch 1, **dadurch gekennzeichnet, dass** die Ausblaseinrichtung (1) stationär angeordnet ist, beispielsweise auf einer zu bestäubenden Landwirtschaftsfläche (16).

3. Ausblaseinrichtung nach Anspruch 2, **dadurch gekennzeichnet, dass** der zumindest eine vertikale Tragarm (9) als Haltemast (17) ausgeführt ist.

4. Ausblaseinrichtung nach Anspruch 2, **dadurch gekennzeichnet, dass** wenigstens ein Tragarm (9) beweglich auf einer stationär angeordneten Führungsvorrichtung (19) gelagert ist.

5. Ausblaseinrichtung nach Anspruch 1, **dadurch gekennzeichnet, dass** die Ausblaseinrichtung (1) auf einem Fahrzeug, insbesondere einem Fahrzeuganhänger (2,26), montierbar ist.

6. Ausblaseinrichtung nach einem der Ansprüche 1 bis 5, **dadurch gekennzeichnet, dass** die Ausblaseinrichtung (1) einen Vorratsbehälter (5) für das Blasgut aufweist.

7. Ausblaseinrichtung nach Anspruch 6, **dadurch gekennzeichnet, dass** die pneumatische Blasgut-Zuführeinrichtung eine Fördereinrichtung, die das Blasgut aus dem Vorratsbehälter (5) fördert und einen Kompressor, der das Blasgut in einem Luftstrom verwirbelt und in einem Blasgutkanal (7) zu dem Gebläse (8) transportiert, aufweist.

8. Ausblaseinrichtung nach Anspruch 7, **dadurch gekennzeichnet, dass** die gleichzeitige Blasgut-Versorgung mehrerer Gebläse (8) durch eine Blasgut-Zuführeinrichtung mit mehreren Blasgutkanälen (7) vorgesehen ist.

9. Ausblaseinrichtung nach einem der Ansprüche 1 bis 8, **dadurch gekennzeichnet, dass** das Gebläse (8) schwenkbar gelagert ist und die Schwenkbewegung durch einen Schwenkantrieb vorgesehen ist.

10. Ausblaseinrichtung nach Anspruch 9, **dadurch gekennzeichnet, dass** der abströmseitige Teilbereich des Gebläses (8) schwenkbar ist.

11. Ausblaseinrichtung nach einem der Ansprüche 1 bis 10, **dadurch gekennzeichnet, dass** die Ausblaseinrichtung (1) wenigsten einen Wassertank (22) aufweist und dass Wasser aus dem Wassertank (22) zu wenigstens einem Gebläse (8) förderbar ist.

12. Ausblaseinrichtung nach Anspruch 11, **dadurch gekennzeichnet**, am Wassertank (22) eine Rohrleitung oder ein Röhrchen angeordnet ist, das eine Flüssigkeitsverbindung in den Verdichterbereich des Gebläses (8) herstellt.

13. Ausblaseinrichtung nach einem der Ansprüche 1 bis 12, **dadurch gekennzeichnet, dass** die Ausblaseinrichtung (1) zur Stromversorgung einen Stromgenerator (10) aufweist.

14. Ausblaseinrichtung nach Anspruch 13, **dadurch gekennzeichnet, dass** der Antrieb des Stromgenerators (10) mit dem Motor eines Fahrzeugs oder eines Zugfahrzeugs in Antriebsverbindung steht.

15. Ausblaseinrichtung nach Anspruch 13, **dadurch gekennzeichnet, dass** für den Antrieb des Stromgenerators (10) ein Verbrennungsmotor vorgesehen ist.
